# EUROPÄISCHE PATENTANMELDUNG

(11) **EP 1 857 787 A2**
(43) Veröffentlichungstag der Anmeldung: **21.11.2007**
(21) Anmeldenummer: 07009774.6
(22) Anmeldetag: 16.05.2007
(51) Int. Cl.: G01G 19/10, G01G 23/48

(54) **Wägevorrichtung für hydraulisch bewegbare Lastbehälter**

(30) Priorität: 16.05.2006 DE 102006023154
(71) Anmelder: Hottinger Baldwin Messtechnik GmbH, 64293 Darmstadt (DE)
(72) Erfinder: Löbig, Manfred, 64839 Münster (DE); Schäfer, Andre, 64380 Rossdorf (DE); Rapp-Hickler, Christoph, 64289 Darmstadt (DE); Viel, Wolfgang, 64297 Darmstadt (DE)
(74) Vertreter: Behrens, Helmut

(57) **Zusammenfassung**

Die Erfindung betrifft eine Wägevorrichtung für hydraulisch bewegbare Lastbehälter, insbesondere für Schaufellader, die mindestens einen Druckaufnehmer (1) zur Ermittlung des Hubdrucks und einen Temperaturaufnehmer (13) zur Erfassung der Temperatur des Hydraulikfluids enthält. Dabei sind der Druckaufnehmer (1) und der Temperaturaufnehmer (13) mit einer elektrischen Auswerteschaltung verbunden, die aus den Aufnehmersignalen das Lastgewicht berechnet. Die Wägevorrichtung ist dadurch gekennzeichnet, dass der Druckaufnehmer als Doppeldruckaufnehmer (1) ausgebildet ist und im Wesentlichen aus einem monolithischen flachen Gehäusekörper (2) besteht. Dabei sind in den Gehäusekörper (2) zwei nebeneinander liegende Messbohrungen (3) eingebracht, die durch eine axiale Vertiefung (4) druckmäßig entkoppelt sind. Entlang jeder Messbohrung (3) ist mindestens ein flacher Mantelflächenbereich vorgesehen, auf dem die Dehnunasmessstreifen (9) appliziert sind. Zur Temperaturerfassung ist in dem Gehäusekörper (2) nur ein gemeinsamer Temperaturaufnehmer (13) integriert.

## Beschreibung

Die Erfindung betrifft eine Wägevorrichtung für hydraulisch bewegbare Lastbehälter nach dem Oberbegriff des Patentanspruchs 1.

Bei der Verwägung von Schüttgütern werden neben stationären Wägevorrichtungen auch verfahrbare Wägevorrichtungen eingesetzt, die vorzugsweise an Hubladefahrzeugen angebracht sind. Bei derartigen Hubladefahrzeugen handelt es sich meist um Radlader, bei denen das Gewicht jeder Ladeschaufel mit Hilfe des Druckes in den hydraulischen Hubzylindern ermittelt wird.

Eine derartige Wägevorrichtung für den Inhalt einer hydraulisch anhebbaren Ladeschaufel an einem Hubfahrzeug ist aus der DE 197 06 836 C2 bekannt. Damit wird der Druck in mindestens einem hydraulischen Hubzylinder der Ladeschaufel mit einem Druckaufnehmer erfasst und daraus das Gewicht der Ladeschaufel oder dessen Inhalt berechnet. Da die Viskosität der Hydraulikflüssigkeiten und damit der Druck erheblich von der Temperatur abhängig ist, muss zur genauen Gewichtsberechnung zusätzlich auch die Temperatur der Hydraulikflüssigkeit berücksichtigt werden. Dazu ist ein Druckaufnehmer in mindestens einer der Druckleitungen angeordnet, der eine metallische Hülse enthält, die durch eine hydraulisch verformbare Membran als Verformungskörper verschlossen ist. An der Rückseite der Membran sind Dehnungsmessstreifen und ein Temperatursensor aufgeklebt und mit einer extern am Fahrzeug angebrachten elektronischen Auswerteschaltung verbunden. Dabei wird aus dem erfassten Druck an der Membran ein diesem zugeordnetes Hubgewicht errechnet und dies durch ein Korrekturfaktor aufgrund der erfassten Temperatur des Hydraulikfluids so korrigiert, dass ein möglichst genaues Gewicht der Ladeschaufel ermittelt wird.

Da in diesem Druckaufnehmern sehr hohe Drücke bis ca. 300 bar herrschen, die erfasst werden müssen, sind die Druckaufnehmer insbesondere an den Verbindungsflächen zwischen der Hülse und der Membran stark belastet. Für einen langlebigen Druckaufnehmer sind deshalb eine dickwandige Hülse und eine dickwandige Membran erforderlich, die hochfest miteinander verbunden sein müssen. Dies erfordert einen relativ großvolumigen schweren Druckaufnehmer, dessen Empfindlichkeit mit zunehmender Membrandicke abnimmt.

Ein kompakter Druckaufnehmer für hohe Drücke ist aus der DE 102 38 163 A1 bekannt. Dieser Hochdruckaufnehmer besteht aus einem einstückigen monolithischen Gehäuse aus einem hochfesten duktilen rostfreien Stahl, in das axial eine zentrale Sackbohrung als Messbohrung eingebracht ist. Dabei ist das Gehäuse zur Ausbildung eines Verformungskörpers als quaderförmiger Abschnitt ausgebildet, das auf einer ebenen äußeren Mantelfläche im Bereich der Messbohrung Bereiche mit positiver und Bereiche mit negativer Dehnung aufweist, auf denen Dehnungsmessstreifen zur Erfassung des Innendrucks appliziert sind. Wegen der hohen Druckfestigkeit ist dieser kompakte Druckaufnehmer auch zur Ermittlung eines Schaufelgewichts eines Hubfahrzeugs geeignet. Zur Kompensation der Änderungen der Hydraulikflüssigkeit infolge der Temperatur ist zusätzlich auch die Anordnung eines Temperaturaufnehmers am Verformungskörper vorgesehen, so dass mit Hilfe des Drucks-und des Temperatursignals durch eine externe elektronische Auswerteschaltung daraus ein genaues Hubgewicht errechenbar ist. Da mit derartigen Schaufelladern als Hubfahrzeuge vielfach auch abrechenbare Schüttgüter verladen werden, müssen derartige Wägevorrichtungen eichfähig sein und damit eine reproduzierbare Genauigkeit bei unterschiedlichen Viskositäten der Hydraulikflüssigkeit aufweisen. Dazu ist es aus Genauigkeitsgründen in der Regel notwendig, für jeden der beiden Hubzylinder einen hochgenauen separaten Druckaufnehmer mit zugehöriger Temperaturkompensation einzusetzen, und diese beiden Hochdruckaufnehmer mit einer externen Auswerteschaltung am Hubfahrzeug zu verbinden. Da die Druckaufnehmer systembedingt im Bereich der bewegbaren Hubteile des Fahrzeugs angebracht sein müssen, können dadurch verursachte Erschütterungen sich nicht nur messwertverfälschend auf den Verformungskörper übertragen, sondern auch leicht zu Schäden an der Verkabelung führen.

Der Erfindung liegt deshalb die Aufgabe zugrunde, eine Wägevorrichtung mit mindestens einem Druckaufnehmer der eingangs genannten Art derart zu verbessern, dass sie unabhängiger von Fahrzeugerschütterungen werden und gleichzeitig störunanfälliger sind und dies bei einfachster kostengünstigster Ausgestaltung.

Die Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch das monolithische einstückige Gehäuse in einem einzigen Bauteil im Grunde zwei separat arbeitende Hochdruckaufnehmer platzsparend und damit kompakt untergebracht werden können. Diese sind durch eine axiale Vertiefung vorteilhaft druckmäßig so entkoppelt, dass auch bei extrem hohen Druckwerten von 150 bis 330 bar keine gegenseitige verfälschende Messwertbeeinflussung auftritt.

Die Erfindung hat zusätzlich den Vorteil, dass durch das einstückige monolithische Gehäuse gleichzeitig eine thermische Verbindung zwischen den Aufnehmerteilen verbleibt, wodurch mit nur einem einzigen Temperaturaufnehmer eine Kompensation der mittleren Fluidtemperatur möglich ist. Dadurch werden gleichzeitig elektrische Anschlussleitungen zu einer externen Auswerteschaltung am Fahrzeug überflüssig, wodurch vorteilhafterweise die Störanfälligkeit verringert wird. Dabei hat die integrierte Anordnung zweier Druckaufnehmer in einem druckfesten Gehäuseteil bzw. Gehäusekörper weiterhin den Vorteil, dass äußere Vibrations- und Fahrzeugerschütterungskräfte identisch auf das gemeinsame D=uckgehäuse einwirken und sich durch eine Differenzbildung kompensieren lassen. Durch das einstückige Gehäuseteil und die gleichartigen thermischen und elektrischen Verhältnisse an den Messbohrungen lässt sich eine hohe Messgenauigkeit erzielen, die insbesondere bei einer eichpflichtigen Gewichtsmessung vorteilhaft ist.

Durch den gemeinsamen Gehäusekörper und die gemeinsamen elektrischen Versorgungs- und Signalerfassungselemente sind für zwei separate Druckaufnehmer mit Temperaturkompensation nur wenige Bauteile erforderlich, so dass insbesondere der Signalerfassungsteil für zwei hydraulische Hubzylinder vorteilhafterweise einfach und kostengünstig herstellbar ist.

Bei einer besonderen Ausbildung der Erfindung ist vorgesehen, die erfassten Druck- und Temperatursignale über eine CAN-BUS-Schnittstelle (CAN = Controller Area Network) abzufragen und über eine gemeinsame Leitung an eine externe Auswerteschaltung zu übertragen, wodurch vorteilhafterweise nur ein minimaler störunanfälliger Leitungsbedarf notwendig ist. Da diese Schnittstelltenschaltung in einer gemeinsamen Zentralbohrung zwischen den Druckaufnehmerteilen untergebracht ist, können dadurch die Platzverhältnisse besonders vorteilhaft ausgenutzt und durch einen gemeinsamen Fertigungsvorgang kostengünstig hergestellt werden. Dabei wird bereits vorteilhafterweise im Aufnehmergehäuse eine Digitalisierung der Aufnehmersignale durchgeführt, wodurch sich Messwertverfälschungen durch lange und unterschiedliche Signal- und Versorgungsleitungen vermeiden lassen. Da bei einer weiteren besonderen Ausführungsart mit einer Zentralbohrung gleichzeitig vorgesehen ist, diese durch eine dünne laserverschweiβte Blechabdeckung mit dem Gehäuseteil zu verschließen, ist vorteilhafterweise eine dauerhafte hermetisch dichte Abkapselung des Aufnehmerteils ohne Kraftnebenschlusskopplung erreichbar, der diese dauerhaft vor Feuchtigkeit und anderen Immissionseinwirkungen schützt.

Die Erfindung wird anhand eines Ausführungsbeispiels, das in der Zeichnung dargestellt ist, näher erläutert. Es zeigen:
- Fig. 1:: eine Explosionsdarstellung eines Doppeldruckaufnehmers und
- Fig. 2:: eine Schnittdarstellung quer durch den Doppeldruckaufnehmer.

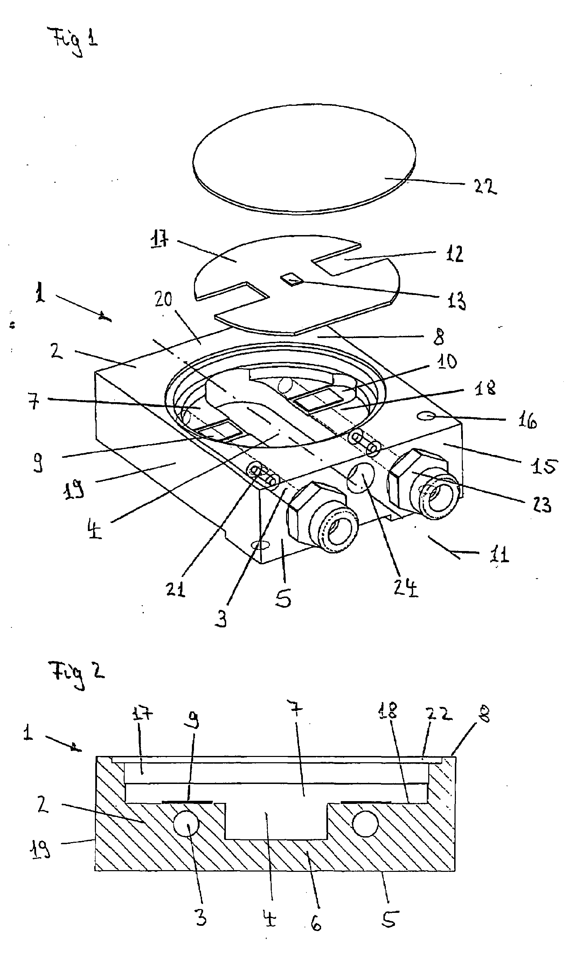

In Fig. 1 der Zeichnung ist ein Doppeldruckaufnehmer 1 für eine mobile Wägevorrichtung dargestellt, der aus einem einstückigen monolithischen Gehäusekörper 2 mit zwei parallelen Bohrungen 3 als Messbohrungen besteht, die durch eine axiale Vertiefung 4 verformungsmäßig entkoppelt sind, wobei an den beiden äußeren ebenen Mantelflächen 18 oberhalb der Bohrungen 3 Dehnungsmessstreifen 9 appliziert sind und quer zwischen den Bohrungen 3 innerhalb des Gehäusekörpers 2 ein gemeinsamer Temperaturaufnehmer 13 angeordnet ist und aus dessen erfassten Messsignalen in einer nicht dargestellten Auswerteschaltung die Gewichtskraft eines hydraulisch bewegbaren Lastbehälters ermittelt wird.

Der Doppeldruckaufnehmer 1 ist vorzugsweise zur Ermittlung des Hubdrucks von zwei hydraulischen Hubzylindern mit Nenndrücken von 15C bis 330 bar vorgesehen, wie sie bei Fahrzeugen mit hydraulisch bewegbaren Lastbehältern notwendig sind. Bei derartigen Hubfahrzeugen handelt es sich meist um Radlader, Schaufelbagger oder Teleskoplader, die als hydraulisch bewegbare Lastbehälter eine Ladeschaufel oder dergleichen aufweisen. Diese werden von vorzugsweise zwei seitlich an der Ladeschaufeln angreifenden hydraulischen Hubzylindern nach dem Auffüllen der Ladeschaufel mit Schüttgütern verschiedenster Art angehoben und zu einem Ladefahrzeug oder Ladebehälter verfahren und dort entleert. Dabei wird während des Anhebens oder vor der Entladung das Gewicht der Ladeschaufel oder deren Inhalt ermittelt, um die Menge der aufgeladenen Schüttgüter zu ermitteln. Dazu wird der Druck in den beiden Hubzylindern bei beladener Ladeschaufel erfasst, der einen Wert des Gewichtsinhalts der Ladeschaufel darstellt. Zur Ermittlung des Gewichts auch bei ungleichmäßigen Ladezuständen in der Ladeschaufel ist es häufig erforderlich, den gewichtsabhängigen Ladedruck in den beiden einzelnen Hubzylindern separat zu erfassen und daraus dann das Inhaltsgewicht der Ladeschaufel zu berechnen. Dazu wird der Druck in beiden Hubzylindern von dem erfindungsgemäßen hochgenauen Doppeldruckaufnehmer 1 erfasst, an den die beiden Hydraulikleitungen der Hubzylinder mit Hilfe von einschraubbaren Druckanschlüssen 23 befestigt sind.

Der Doppeldruckaufnehmer 1 besteht dabei im wesentlichen aus einem quaderförmigen einstückigen monolithischen Gehäusekörper 2, vorzugsweise aus einem hochfesten, rostfreien Stahl, der Stahlsorten 1.4542 oder 1.4534. Dieser Gehäusekörper 2 ist ca. 90 mm lang, 70 mm breit und ca. 25 mm hoch. In diesem Gehäusekörper 2 sind in Längsrichtung zwei parallele Bohrungen 3 als Messbohrungen eingelassen, die seitlich ca. 20 mm beabstandet sind. Die Bohrungen 3 erstrecken sich ca. 80 mm innerhalb des Gehäusekörpers 2 und sind am Anfangsbereich mit einem Gewindestutzen versehen, mit dem die beiden nicht dargestellten Hydraulikanschlussleitungen dicht mit den Druckanschlüssen 23 am Gehäusekörper 3 verschraubt werden. Innerhalb der Bohrungen 3 ist jeweils noch eine Drosselstelle 21 als Druckspitzenbegrenzungselement zur Druckspitzendämpfung vorgesehen, mit der hohe dynamische Druckspitzenwerte bis 500 bar gedämpft werden. Dabei weisen die Bohrungen 3 vorzugsweise einen Durchmesser von 3-6 mm auf, in die die Drosselstellen einpressbar sind.

Zwischen den beiden Bohrungen 3 ist im Gehäusekörper 2 eine axiale lang gestreckte Vertiefung 4 ausgefräst, die sich mindestens bis zur Länge der Bohrung 3 in dem Gehäusekörper 2 längsseits erstreckt. Aus der Schnittdarstellung nach Fig. 2 der Zeichnung ist dabei ersichtlich, dass unterhalb der axialen Vertiefung 4 ein dünner Verbindungssteg 6 von ca. 5 mm Dicke belassen ist, der zur Grundfläche 5 des Doppeldruckgehäuses 1 eine ebene Gehäusefläche bildet. An der Oberseite 8 als Deckfläche des Gehäusekörpers 1 ist eine Zentralbohrung 7 von etwa 10 mm Tiefe und einem Durchmesser von ca. 60 mm eingelassen, die mit der axialen Vertiefung 4 eine gestufte Öffnung zur Deckfläche 8 bildet. Durch die zentrale Bohrung 7 wird oberhalb der Bohrungen 3 jeweils eine ebene Mantelfläche 18 vorgesehen, die oberhalb der Bohrungen 3 eine ebene relativ dünne Mantelfläche als Verformungskörper zur Bohrungsinnenwand bildet, auf der mindestens ein oder mehrere Dehnungsmessstreifen 9 appliziert sind. Diese Dehnungsmessstreifen 9 dienen zur Erfassung des Hubdrucks in den beiden Hubzylindern und werden vorzugsweise als Wheatstonesche Messbrücke verschaltet, um die Dehnung der Verformungskörper 18 in ein proportionales elektrisches Drucksignal umzuwandeln, wenn die Bohrungen 3 mit einem Hubdruck bis 330 bar beaufschlagt werden.

Oberhalb der ebenen Mantelfläche 18 ist in der Zentralbohrung 7 eine runde Leiterplatte 17 eingepasst, die im Bereich der Dehnungsmessstreifen 9 zwei symmetrisch zu der Längsachse 11 angeordnete rechteckige Aussparungen 12 aufweist, die eine einfache Applizierung und Verdrahtung der Dehnungsmessstreifen 9 während des Herstellungsprozesses ermöglichen. Auf dieser Leiterplatte 17 ist im Bereich der axialen Vertiefung 4 ein gemeinsamer Temperaturaufnermer 13 angebracht, der die Temperatur mindestens in dem Zwischenraum der beiden Bohrungen 3, vorzugsweise in der axialen Vertiefung 4 erfasst. Dies ist eine mittlere Temperatur der in beiden Aufnehmerzweigen vorhandenen Hydraulikflüssigkeiten, da durch die gemeinsamen Gehäusestege 6,20 eine hinreichende thermische Kopplung besteht.

Auf der Leiterplatte 17 sind weiterhin noch nicht im Einzelnen dargestellte elektronische Verstärkerelemente, AD-Wandler sowie eine CAN-BUS-Schnittstelle angeordnet. Durch die CAN-BUS-Schnittstelle werden die erfassten Messsignale nur auf einer elektrischen Leitung zeitgleich oder periodisch abgefragt und in einer externen Auswerteschaltung am Fahrzeug weiter verarbeitet. Zum Anschluss dieser elektrischen Leitung ist im Gehäusekörper 2 noch eine zusätzliche Anschlussbohrung 24 zwischen den beiden Bohrungen 3 angeordnet, wo die elektrische Anschlussleitung zur Leiterplatte 17 und zu den Aufnehmerelementen 9,13 abdichtend eingeführt wird. Im fertig montierten Zustand wird die Zentralbohrung 7 durch ein dünnes Blech 22 aus Edelstahl abgedeckt und deren Ränder vorzugsweise über ein Laserschweißverfahren dicht mit dem Gehäusekörper 2 verschweißt.

Ein derartiger Doppeldruckaufnehmer 1 wird fest an ein stationäres oder bewegliches Fahrzeugteil im Bereich der Hubzylinder befestigt. Damit Vibrations- und Erschütterungskräfte beim Betrieb des Fahrzeugs das Druckmesssignal nicht verfälschen, sind im Bereich der Bohrungsstirnfläche 15 zwei Befestigungsbohrungen 16 symmetrisch zur Längsachse 11 und nach außen gerichtet neben den Bohrungen 3 angebracht. Damit wird gleichzeitig auch verhindert, dass sich Kräfte und Bewegungen aus dem Hydraulikanschlussleitungen auf den Gehäusekörper 2 übertragen.

Zur Ermittlung des Ladeschaufelgemichts wird jede der beiden hydraulischen Anschlussleitungen mit dem Druck jeweils eines der Hubzylinder beaufschlagt. Dadurch entsteht im Verformungskörper 18 im Bereich der applizierten Dehnungsmessstreifen 9 bei Nenndrücken von 150 bis 330 bar eine Dehnung, die in ein entsprechendes Druckmesssignal umgewandelt wird, was dem Druck in den Hubzylindern proportional ist. Bei einer entsprechenden vertikalen Krafteinleitung wäre es auch der Gewichtskraft der Ladeschaufel proportional. Bei einer Schrägstellung der Ladeschaufel oder des Hubfahrzeugs könnte dies auch rechnerisch oder direkt über Neigungssensoren entsprechend berücksichtigt werden. Bei einer vertikalen Krafteinleitung und waagerechten Ausrichtung des Hubfahrzeugs werden die beiden Drucksignale aus den beiden Druckaufnehmerteilen mit Hilfe der elektronischen Bauelemente auf der Leiterplatte 17 zunächst verstärkt und in einem AD-Wandler (Analog-DigitalWandler) in zwei digitale Drucksignale umgewandelt, die jeweils einen der beiden Hubzylinder zuordnenbar sind. Diese Drucksignale werden nachfolgend durch die CAN-BUS-Schnittstelle umgewandelt und einer externen am Fahrzeug angeordneten Auswerteschaltung übermittelt. Gleichzeitig wird auch die mittlere Temperatur der beiden Hydraulikflüssigkeiten durch den auf der Leiterplatte 17 angebrachten gemeinsamen Temperaturaufnehmer 13 erfasst, verstärkt, digitalisiert und über die CAN-BUS-Schnittstelle ebenfalls der Auswerteschaltung zugeführt. In der Auswerteschaltung wird dann aus den beiden Drucksignälen ein mittleres Drucksignal errechnet, das um die erfasste mittlere Fluidtemperatur korrigiert wird, woraus der Gewichtswert des Inhalts der Ladeschaufel auf herkömmliche Weise errechenbar ist. Der entsprechende Gewichtswert einer Ladeschaufel oder deren Summe für eine oder mehrere Beladungen kann dann angezeigt oder weiter verarbeitet werden. Die Gewichtsermittlung mittels eines Doppeldruckaufnehmers 1 erfolgt meist für zwei an einer Ladeschaufel angebrachte Hubzylinder gleichzeitig.

Mit einem derartigen Doppeldruckaufnehmer 1 kann aber auch gleichzeitig der Druck eines Hubkolbens auf der Kolbenoberseite (Hebedruckseite) und der Kolbenbodenseite zur Gewichtsermittlung erfasst werden, wenn dessen Druckdifferenz ausgewertet werden soll.

## Patentansprüche

1. Wägevorrichtung für hydraulisch bewegbare Lastbehälter, die mindestens einen Druckaufnehmer (1) zur Ermittlung des Hubdruckes und mindestens einen Temperaturaufnehmer (13) zur Erfassung der Temperatur des Hydraulikfluids enthält, die mit einer elektrischen Auswerteschaltung zur Berechnung des Lastgewichts verbunden sind, **dadurch gekennzeichnet, dass** der Druckaufnehmer als Doppeldruckaufnehmer (1) ausgebildet ist, der aus einem monolithischen flachen Gehäusekörper (2) besteht, in dem zwei nebeneinander liegende Messbohrungen (3) angebracht und die durch eine axiale Vertiefung (4) verformungsmäßig entkoppelt sind und dass entlang jeder Messbohrung (3) mindestens eine ebene Mantelfläche (18) angeordnet ist, auf denen Dehnungsmessstreifen (9) appliziert sind, wobei der Temperaturaufnehmer (13) im Gehäusekörper zwischen den Messbohrungen (3) angeordnet ist.

2. Messvorrichtung nach Anspruch 1, **dadurch gekennzeichnet, dass** der monolithische Gehäusekörper (2) quaderförmig ausgebildet ist und aus einer ebenen Deck- (8) und Grundfläche (5) sowie aus zwei ebenen Seitenflächen (19) und zwei ebenen Stirnflächen (15) besteht.

3. Wägevorrichtung nach Anspruch 1 oder 2, **dadurch gekennzeichnet, dass** entlang der Seitenflächen (19) als Messbohrungen zwei beabstandete parallele Bohrungen (3) vorgesehen sind, die mindestens durch eine axiale Vertiefung (4) getrennt und durch mindestens zwei Querstege (20) mechanisch und thermisch verbunden sind, wobei mindestens zwischen den beiden Messbohrungen (3) und den Querstegen (6,20) innerhalb des Gehäusekörpers (2) der gemeinsame Temperaturaufnehmer (13) angeordnet ist.

4. Wägevorrichtung nach einem der vorhergehenden Ansprüche, **dadurch gekennzeichnet, dass** ausgehend von der Deckfläche (8) eine zentrale Bohrung (7) in den Gehäusekörper (2) eingebracht ist, die mindestens entlang der beiden Messbohrungen (3) mindestens zwei ebene Mantelflächen (18) als Verformungskörper zur Applizierung der Dehnungsmessstreifen (9) bildet, wobei der Gehäusekörper (2) symmetrisch zu einer Längsachse (11) ausgebildet ist.

5. Wägevorrichtung nach einem der vorhergehenden Ansprüche, **dadurch gekennzeichnet, dass** in der zentralen Bohrung (7) des Gehäusekörpers (2) oberhalb der ebenen Mantelflächen (18) eine Leiterplatte (17) eingepasst ist, auf der der gemeinsame Temperaturaufnehmer (13) angeordnet ist.

6. Wägevorrichtung nach Anspruch 5, **dadurch gekennzeichnet, dass** die Leiterplatte (17) oberhalb der Applizierungsbereiche der ebenen Mantelflächen (18) mindestens zwei Aussparungen (12) aufweist, die zur Verdrahtung der Dehnungsmessstreifen (9) diener.

7. Wägevorrichtung nach Anspruch 5 oder Anspruch 6, **dadurch gekennzeichnet, dass** auf der Leiterplatte (17) zusätzlich mindestens noch elektronische Verstärkerelemente, Analog- Digital-Wandlerelemente und mindestens noch eine elektronische Schnittstelle für ein Bus-System zur Verbindung der Aufnehnersignale mit der externen Auswerteschaltung angeordnet sind.

8. Wägevorrichtung nach einem der vorhergehenden Ansprüche, **dadurch gekennzeichnet, dass** innerhalb der Messbohrungen (3) jeweils mindestens ein Druckspitzenbegrenzungselement (21) angeordnet ist.

9. Wägevorrichtung nach einem der vorhergehenden Ansprüche, **dadurch gekennzeichnet, dass** die zentrale Bohrung (7) im montierten Zustand des Doppeldruckaufnehmers (1) durch eine dünne Blechabdeckung (22) hermetisch dicht verschweißt ist.

10. Wägevorrichtung nach einem der vorhergehenden Ansprüche, **dadurch gekennzeichnet, dass** im Bereich der Bohrungsstirnfläche (15) zur Deck- (8) und/oder Grundfläche (5) mindestens eine Befestigungsbohrung (16) vorgesehen ist.

11. Wägevorrichtung nach einem der vorhergehenden Ansprüche, **dadurch gekennzeichnet, dass** aus den Druckmesssignalen der beiden Druckaufnehmerbereiche des Doppeldruckaufnehmers (1) unter Berücksichtigung der mittleren Fluidtemperatur aus dem gemeinsamen Temperaturaufnehmer (13) in der Auswerteschaltung daraus das Hubgewicht und/oder das Gewicht des Lastbehälterinhalts ermittelt werden.
